# EUROPEAN PATENT APPLICATION

(11) **EP 4 750 162 A1**
(43) Date of publication of application: **27.05.2026**
(21) Application number: 25213760.9
(22) Date of filing: 05.11.2025
(51) Int. Cl.: H04W 48/16, H04W 48/12, H04W 84/12

(54) **SIGNALING FOR INEXTENSIBLE ESSS**

(30) Priority: 25.11.2024 KR 20240170116; 17.01.2025 KR 20250007552; 29.05.2025 US 202519222093
(71) Applicant: Samsung Electronics Co., Ltd., Suwon-si, Gyeonggi-do 16677 (KR)
(72) Inventor: LUNGU, Daniel Alexandru, Cambridge CB4 0AE (GB); RISON, Mark Gorthorn, Cambridge CB4 0AE (GB)
(74) Representative: Marks & Clerk LLP

(57) **Abstract**

An electronic device, including: a transceiver; at least one processor; and a memory configured to store instructions which, when executed by the at least one processor, cause the electronic device to: associate with a basic service set (BSS) included in an extended service set (ESS), wherein the BSS corresponds to an access point (AP) associated with a distribution system for a wireless network, receive, from the AP, capability information indicating whether at least one additional BSS is included in the ESS, determine whether to allow roaming scans based on the capability information, based on determining to allow the roaming scans: monitor a roaming trigger condition, and based on determining that the roaming trigger condition is satisfied, perform a roaming scan according to the capability information, and based on determining not to allow the roaming scans, continue to associate with the BSS without monitoring the roaming trigger condition.

## Description

### BACKGROUND

### 1. Field

The disclosure relates to managing roaming scans in a wireless network, for example a wireless local area network (WLAN) system according to Institute of Electrical and Electronics Engineers (IEEE) 802.11.

### 2. Description of Related Art

A Wi-Fi station (STA) may connect to a basic service set (BSS) included in an extended service set (ESS), for example by establishing a link with a Wi-Fi access point (AP) corresponding to the BSS. When the STA goes out of a range of the AP and leaves the BSS, it may perform a roaming scan to identify other BSSs in the same ESS to which it may be able to roam, before disconnecting from the ESS. The STA may also perform a roaming scan when, for example, the AP decides to terminate the link (e.g. when the AP is rebooting, or is overloaded), or when the link quality decreases.

In some scenarios, this behavior may be beneficial. For example, when the ESS includes more than one BSS, the roaming scan may allow the STA to find a new BSS and the STA can move its association to a new BSS and therefore avoid disconnecting from the ESS. However, in small networks (e.g., networks including only one BSS) this behavior may be wasteful and undesirable. However, STAs may need to perform these roaming scans regardless of the size of the ESS, because there may be no mechanism for the AP to inform the STA it is a standalone device and that there is no other BSS to be found in the ESS.

A similar problem may exist for ESSs including only a single physical AP that hosts a plurality of BSSs, or in other non-extensible or inextensible ESSs (e.g., ESSs having a set of member BSSs that is known and cannot be changed). The AP may be able to inform the STA of the plurality of BSSs, but may be unable to convey to the STA that all of the plurality of BSSs are known, and no other APs (or no other BSSs) exist in a distribution system corresponding to the ESS.

### SUMMARY

In accordance with an aspect of the disclosure, an electronic device includes: a transceiver; at least one processor; and a memory configured to store instructions which, when executed by the at least one processor, cause the electronic device to: associate with a basic service set (BSS) included in an extended service set (ESS), wherein the BSS corresponds to an access point (AP) associated with a distribution system for a wireless network, receive, from the AP, capability information indicating whether at least one additional BSS is included in the ESS, determine whether to allow roaming scans based on the capability information, based on determining to allow the roaming scans: monitor a roaming trigger condition, and based on determining that the roaming trigger condition is satisfied, perform a roaming scan according to the capability information, and based on determining not to allow the roaming scans, continue to associate with the BSS without monitoring the roaming trigger condition.

In accordance with an aspect of the disclosure, a method of managing roaming scans is performed by at least one processor included in an electronic device, and includes: associating with a basic service set (BSS) included in an extended service set (ESS), wherein the BSS corresponds to an access point (AP) associated with a distribution system for a wireless network; receiving, from the AP, capability information indicating whether at least one additional BSS is included in the ESS; determining whether to allow roaming scans based on the capability information; based on determining to allow the roaming scans: monitoring a roaming trigger condition; and based on determining that the roaming trigger condition is satisfied, performing a roaming scan according to the capability information; and based on determining not to allow the roaming scans, continuing to associate with the BSS without monitoring the roaming trigger condition.

In accordance with an aspect of the disclosure, an electronic device includes: a transceiver; at least one processor; and a memory configured to store instructions which, when executed by the at least one processor, cause the electronic device to: connect to an access point (AP) associated with a distribution system for a wireless network, wherein the AP corresponds to a basic service set (BSS) included in an extended service set (ESS), receive, from the AP, capability information indicating a number of BSSs included in the ESS, determine whether to enable roaming functionality based on the capability information, based on determining to enable the roaming functionality: monitor a roaming trigger condition, and based on determining that the roaming trigger condition is satisfied, perform a roaming scan according to the capability information, and based on determining to disable the roaming functionality, continue to connect to the AP without monitoring the roaming trigger condition.

At least some of the above and other features of the invention are set out in the claims.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 illustrates an overall structure of an example of a wireless communication system, according to embodiments;
FIG. 2 illustrates a wireless communication system, according to embodiments;
FIGS. 3A, 3B, and 3C are diagrams illustrating an example of performing a roaming scan, according to embodiments.
FIG. 4 is a diagram illustrating an example of performing a roaming scan, according to embodiments.
FIG. 5 is a diagram illustrating an example of determining not to perform a roaming scan, according to embodiments.
FIG. 6 is a flowchart showing an examples of a process for managing roaming scans, according to embodiments.

### DETAILED DESCRIPTION

As discussed above, a Wi-Fi station (STA) may connect to a basic service set (BSS) included in an extended service set (ESS), for example by establishing a link with a Wi-Fi access point (AP) corresponding to the BSS. The STA may perform a roaming scan to identify other BSSs in the same ESS, for example when the STA goes out of range of the AP and leaves the BSS, when the AP decides to terminate the link, or when the link quality decreases (e.g. falls below a threshold). However, in some situations, it may not be desirable to frequently perform a full roaming scan.

Therefore, embodiments may allow an STA to receive capability information about a capability of the ESS, which may allow the STA to better evaluate and manage its roaming scan behavior. According to embodiments, the capability information may indicate a number of BSSs which are included in the ESS, for example by indicating whether the ESS includes only one BSS or a plurality of BSSs, and may also provide additional information about any BSSs that may be included in the ESS. Examples of the capability information and the roaming scan behavior according to embodiments are described in greater detail below.

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under other circumstances.

According to one or more embodiments, an electronic device may refer to at least one of various types of electronic devices. The electronic devices may include, for example, a network device, a router, an access point device, a terminal station in a wireless system, a portable communication device (e.g., a smartphone), a computer device, a portable multimedia device, a portable medical device, a camera, a wearable device, or a home appliance. According to an embodiment of the disclosure, the electronic devices are not limited to those described above.

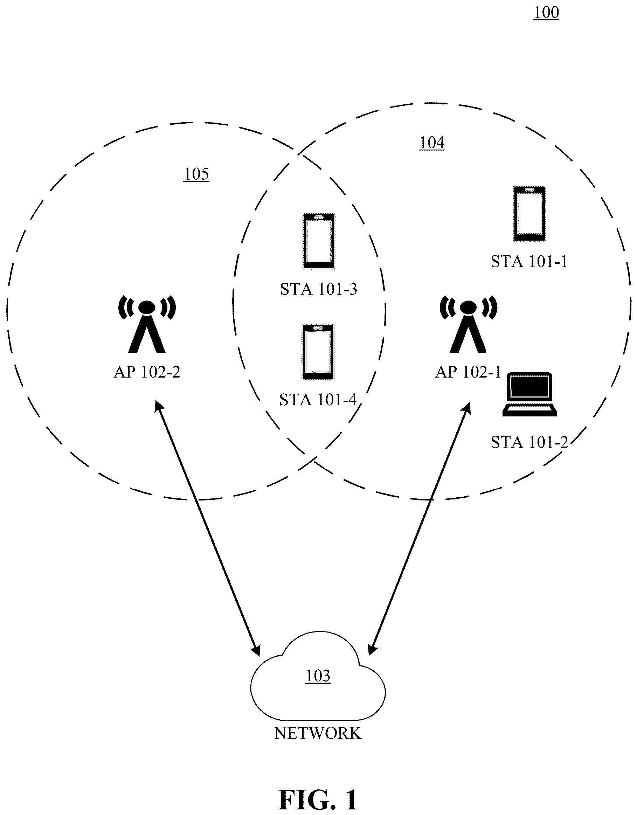

FIG. 1 illustrates an example structure of a wireless communication system, according to embodiments.

Throughout the disclosure, examples are described which relate to the Institute of Electrical and Electronics Engineers (IEEE) 802.11 wireless LAN (WLAN) standards, the contents of which are incorporated by reference herein in their entirety. However, embodiments are not limited thereto. For example, some embodiments may be applied to other communication systems (e.g., a cellular communication system such as long term evolution (LTE), LTE-advanced (LTE-A), new radio (NR), wireless broadband (WiBro), a global system for mobile communication (GSM), or a short-range communication system such as Bluetooth and near field communication (NFC)) with a similar technical background and channel form with slight modifications without departing from the scope of the disclosure, as may be determined by one of ordinary skill in the art.

As shown in FIG. 1, the wireless communication system 100 may include a first STA 101-1, a second STA 101-2, a third STA 101-3, a fourth STA 101-4, a first access point (AP) 102-1, and a second AP 102-2. The first AP 102-1 and the second AP 102-2 may access a network 103 that may include the Internet, an Internet protocol (IP) network, a distribution network (DN), or any other network.

The first AP 102-1 may provide the first STA 101-1, the second STA 101-2, the third STA 101-3, and the fourth STA 101-4 with access to the network 103 within a first BSS 104. The second AP 102-2 may provide the third STA 101-3 and the fourth STA 101-4 with access to the network 103 within a second BSS 105. According to embodiments, the first BSS 104 and the second BSS 105 may be included in a single ESS, and therefore correspond to a single service set identifier (SSID).

In embodiments, the first AP 102-1 may communicate with at least one of the first STA 101-1, the second STA 101-2, the third STA 101-3, and the fourth STA 101-4 based on IEEE 802.11 Wi-Fi, or any other WLAN access technology.

In some embodiments, an AP (e.g., the first AP 102-2 and/or the second AP 102-2) may be referred to as a router, a gateway, and the like. In some embodiments, an STA (e.g., the first STA 101-1, the second STA 101-2, the third STA 101-3, and/or the fourth STA 101-4) may be referred to as a mobile station, a subscriber station, a terminal, a mobile terminal, a wireless terminal, user equipment, a user, and the like. The STA may be a mobile device, such as a mobile phone, a laptop computer, a wearable device, or the like, or a stationary device, such as a desktop computer, a smart TV, or the like.

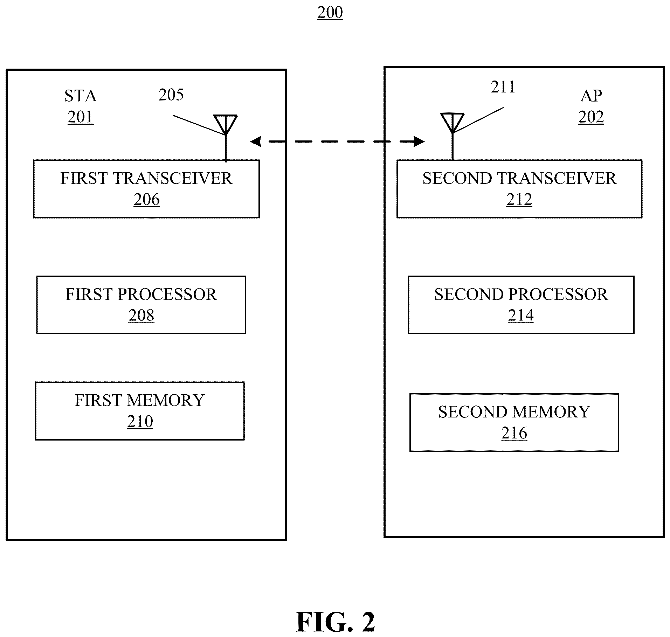

FIG. 2 illustrates a wireless communication system 200 in accordance with embodiments of the disclosure. FIG. 2 illustrates an STA 201 and an AP 202 that communicate with each other in the wireless communication system 200. In embodiments, the STA 201 may be referred to as a first electronic device and the AP 202 may be referred to as a second electronic device, but embodiments are not limited thereto. Each of the AP 202 and the STA 201 of FIG. 2 may be any apparatus communicating or configured to communicate in the wireless communication system 200 and may be referred to as an apparatus for wireless communication. In some embodiments, the STA 201 may correspond at least one of the at least one of the first STA 101-1, the second STA 101-2, the third STA 101-3, and the fourth STA 101-4.

As shown in FIG. 2, the STA 201 may include a first antenna 205, a first transceiver 206, a first processor 208, and a first memory 210. Similarly, the AP 202 may include a second antenna 211, a second transceiver 212, a second processor 214, and a second memory 216.

In embodiments, the first antenna 205, the first transceiver 206, the first processor 208, and the first memory 210 may be included in one package or may be included in different packages, respectively. In embodiments, the second antenna 211, the second transceiver 212, the second processor 214, and the second memory 216 may be included in one package or may be included in different packages, respectively.

In embodiments, the first antenna 205 may receive a signal from the second antenna 211 and provide the received signal to the first transceiver 206, and may transmit a signal provided from the first transceiver 206 to the second antenna 211. Similarly, the second antenna 211 may receive a signal from the first antenna 205 and provide the received signal to the second transceiver 212, and may transmit a signal provided from the second transceiver 212 to the first antenna 205.

In embodiments, the first transceiver 206 may process a signal received from the STA 201 through the first antenna 205, and may provide the processed signal to the first processor 208. In embodiments, the first transceiver 206 may process the signal provided from the first processor 208 and output the processed signal through the first antenna 205. The second transceiver 212 may similarly perform the above functions performed by the first transceiver 206.

In embodiments, the first transceiver 206 and the second transceiver 212 may include one or more circuits such as a low noise amplifier, a mixer, a filter, a power amplifier, an oscillator, and the like.

In embodiments, the first processor 208 may extract information transmitted by the AP 202 by processing the signal received from the first transceiver 206. For example, the first processor 208 may extract information by demodulating and/or decoding a signal received from the first transceiver 206.

In embodiments, the first processor 208 may generate a signal including information to be transmitted to the AP 202 and provide the signal to the first transceiver 206. In embodiments, the first processor 208 may provide a signal generated by encoding and/or modulating data to be transmitted to the STA 201 to the first transceiver 206. The second processor 214 may similarly perform the above functions performed by the first processor 208 with respect to information transmitted by the STA 201 and information to be transmitted to the STA 201.

In embodiments, the first processor 208 and the second processor 214 may include a programmable component such as a central processing unit (CPU), a digital signal processor (DSP), and the like, may include reconfigurable components, such as field programmable gate arrays (FPGAs), and may include a component that provides a fixed function, such as an intellectual property (IP) core.

In embodiments, the first processor 208 may include or access the first memory 210 that stores data and/or a series of instructions. In embodiments, the second processor 214 may include or access the second memory 216 that stores data and/or a series of instructions.

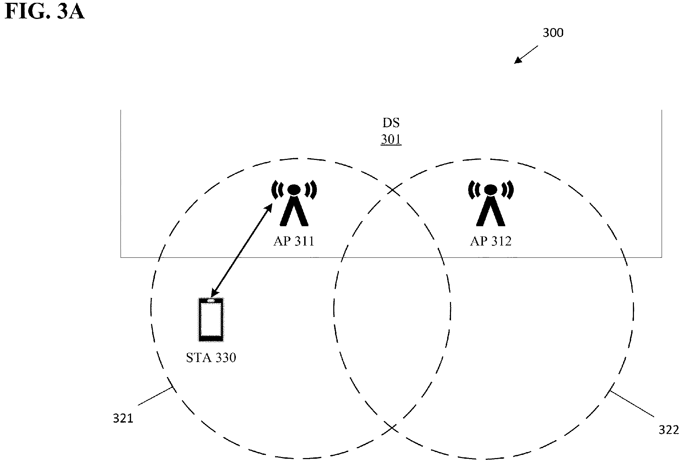

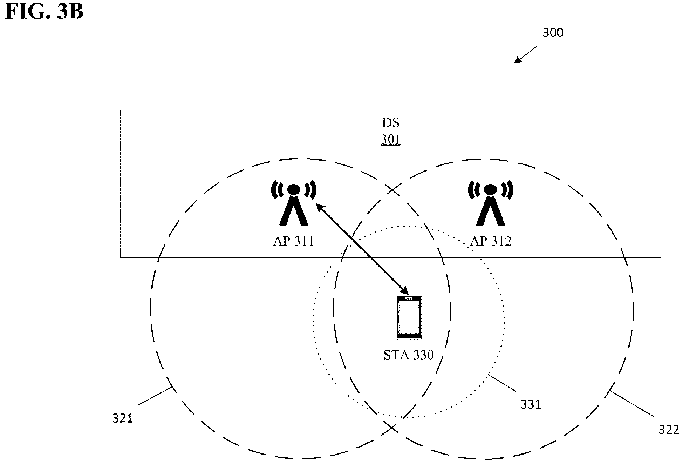

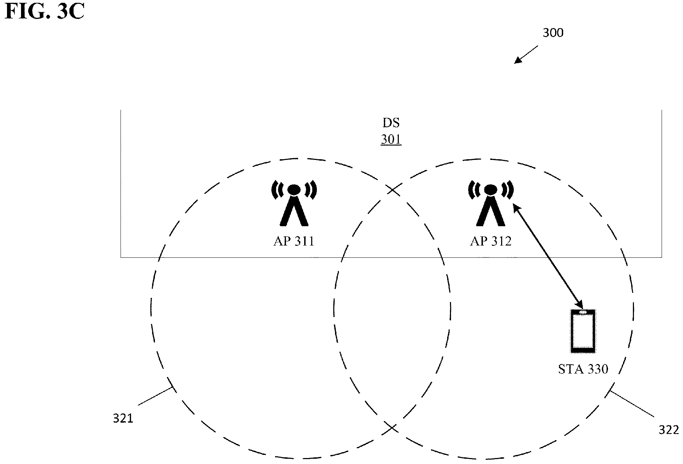

FIGS. 3A, 3B, and 3C are diagrams illustrating an example of performing a roaming scan, according to embodiments. As shown in FIG. 3A, a wireless communication system 300 may include a distribution system (DS) 301, a first AP 311 corresponding to a first BSS 321, a second AP 312 corresponding to a second BSS 322, and an STA 330. According to embodiments, the DS 301 may be used to connect the first AP 311 with the second AP 312, and may allow the first BSS 321 and the second BSS 322 to be included in a single ESS.

As shown in FIG. 3A, the STA 330 may be associated with or connected to the first AP 311, and therefore may be included in the first BSS 321. However, as shown in FIG. 3B, as the STA 330 moves away from the first AP 311, the STA 330 may observe a decreased received signal strength (e.g. a decreased received signal strength indicator (RSSI)) corresponding to the first AP 311, which may trigger the STA 330 to perform a roaming scan 331 in an attempt to detect other BSSs that may be included in the ESS corresponding to the DS 301. However, embodiments are not limited thereto, and the roaming scan 331 may be triggered based on one or more of a plurality of roaming trigger conditions being satisfied. According to embodiments, the plurality of roaming trigger conditions may include at least one of determining that a detected RSSI is below a threshold RSSI value, determining that a channel utilization of a channel corresponding to the first BSS 321 is above a threshold channel utilization, detecting a beacon loss, receiving a deauthentication frame and/or a disassociation frame from the first AP 311, receiving a BSS transition management (BTM) request from the first AP 311, and determining that a Bluetooth link has been established by the STA 330 (for example when the link between the STA 330 and the first AP 311 is in a 2.4 gigahertz (GHz) band shared with the Bluetooth link). However, these are only examples, and embodiments are not limited thereto. For example, according to embodiments, the plurality of roaming trigger conditions may include any other type of roaming trigger condition.

According to embodiments, there may be different types of roaming scans. For example, a full channels scan may refer to a roaming in which the STA 330 scans all channels on which the STA 330 might find a BSS in the same ESS as the first BSS 321. In contrast, a cached channels scan may refer to a roaming scan in which the STA 330 only scans channels on which BSSs in the same ESS are known to be present. According to embodiments, reducing the scan type from a full channels scan to a cached channels scan may provide a significant time and power saving. For example, for a tri-band STA device, a full scan may take more than 3000 milliseconds (ms), while a cached channels scan with three cached channels may be completed in significantly less time, for example approximately 240 ms.

As shown in FIG. 3C, based on the roaming scan 331, the STA 330 may detect the second AP 312, and identify the second AP 312 as a suitable candidate. Accordingly, the STA 330 may move its association from the first AP 311 to the second AP 312, and may therefore be included in the second BSS 322.

The roaming procedure described above may be beneficial in situations in which the second AP 312 exists, or at least in situations in which there is a possibility of a second AP 312. However, in other situations, this roaming procedure may not be beneficial. For example, some home networks may include only a single AP, which may not have an extensible DS, and therefore may not allow a second AP to be added. As a result, in these situations and some other situations, the roaming procedure described above may be undesirable or even wasteful.

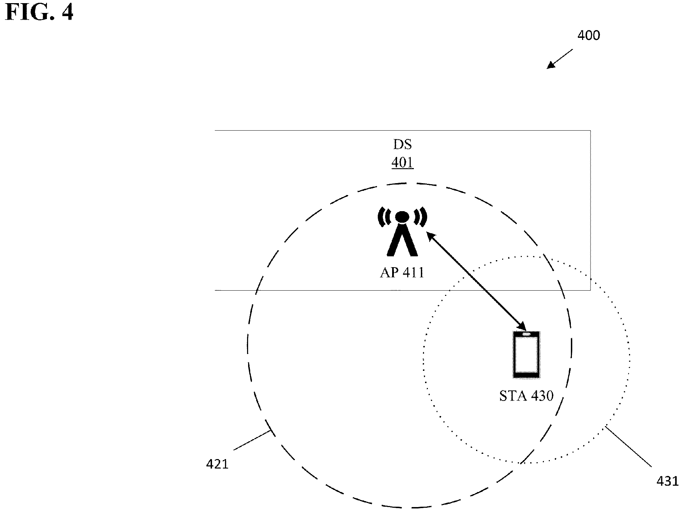

FIG. 4 is a diagram illustrating another example of performing a roaming scan, according to embodiments. As shown in FIG. 4, a wireless communication system 400 may include a DS 401, an AP 411 corresponding to a BSS 421, and an STA 430. Unlike the wireless communication system 300 discussed above, the wireless communication system 400 may include only a single AP (e.g., the AP 411). As a result, an ESS corresponding to the DS 401 may only include a single BSS (e.g., the BSS 421).

In the example shown in FIG. 4, even though there are no other BSSs included in the ESS, the STA 430 may still perform the roaming procedure as described above. For example, the STA 430 may continue to monitor the roaming trigger conditions, and may still be triggered to perform roaming scans based on the roaming trigger conditions. For example, the STA 430 may continue to monitor an RSSI corresponding to the AP 411, and may perform a roaming scan based on determining that the RSSI is below a threshold RSSI value. The STA 430 may continue to monitor a channel utilization of a channel corresponding to the BSS 421, and may perform a roaming based on determining that the channel utilization is above a threshold channel utilization value. Similarly, the STA 430 may perform a roaming scan based on at least one of detecting that a beacon loss has occurred, receiving a deauthentication frame and/or a disassociation frame from the AP 411, receiving a BTM request from the AP 411, and determining that a Bluetooth link has been established by the STA 430 (for example when the link between the STA 430 and the AP 411 is in the 2.4 GHz band).

However, because there are no other BSSs included in the ESS, all of these roaming scans may be wasteful and potentially detrimental. For example, by performing these roaming scans, the STA 430 may introduce latency in an already challenged link, reducing throughput and increasing its power consumption for no benefit. The end user experience may be further degraded because the STA 430 may be delaying an eventual disconnection from the AP 411 in order to perform the roaming scans. This issue can be further exacerbated when the AP 411 is a non-multi-link operation (MLO) dual band AP which has different ESSs (e.g., different SSIDs) per band. For example, the need to perform the roaming scans may prevent the STA 430 from dropping quickly from a higher band to a lower band as the STA 430 moves away from the AP 411, which may extend the amount of time that the STA 430 experiences a degraded link.

However, the STA 430 may need to perform these roaming scans regardless of the size of the ESS, because the wireless communication system 400 may not include a mechanism by which the AP 411 may inform the STA 430 that it is a standalone device, and there is no other BSS in the ESS to be found. A similar problem may exist for ESSs including only a single physical AP that hosts a plurality of BSSs, or in other non-extensible ESSs. In these situations, the AP may inform the STA of the plurality of BSSs, but may be unable to convey the information that all of the plurality of BSSs are known, and no other APs (or no other BSSs) exist in a distribution system corresponding to the ESS.

For example, Neighbor Report (NR) elements and Reduced Neighbor Report (RNR) elements may be used to inform STAs of other APs, but the lack of NR/RNR elements cannot be interpreted as a definite indication that no other APs (or BSSs) are included in a particular ESS, and the presence of NR/RNR elements may not guarantee that all APs (or BSSs) are indicated. In addition, an ESS Report element may allow an AP to advertise that it is part of a planned ESS, and if it is, that it is at the edge of the ESS coverage area, but may not allow an AP to advertise the special case of the AP being at the edge because it is the only one in the ESS. As another example, 802.11ax describes a "Complete List of NonTxBSSID Profiles" which may be used to indicate that a frame carrying this element includes a complete list of nontransmitted BSSID profiles. A nontransmitted BSSID may refer to a BSSID corresponding to one of the BSSs when the multiple BSSID capability is supported that is not transmitted explicitly, but that can be derived from the information encoded in Probe Response, Beacon and directional multi-gigabit (DMG) Beacon frames and neighbor reports. The MBSSID may be used exclusively for BSSs using the same primary channel, PHY capabilities, and usually these BSSs belong to different ESSs, and therefore an SSID list may be used. However, even a complete list of non-transmitted BSSID profiles cannot be used as an indication of the presence of other BSSs in the ESS. Some meshing algorithms may have path selection protocols, but these algorithms may be unable to efficiently convey that no other APs (or BSSs) are included in a particular ESS. In addition, Radio Data System (RDS) may include a mechanism to signal frequency modulation (FM) alternative frequencies, but may be unable to provide an empty list of frequencies.

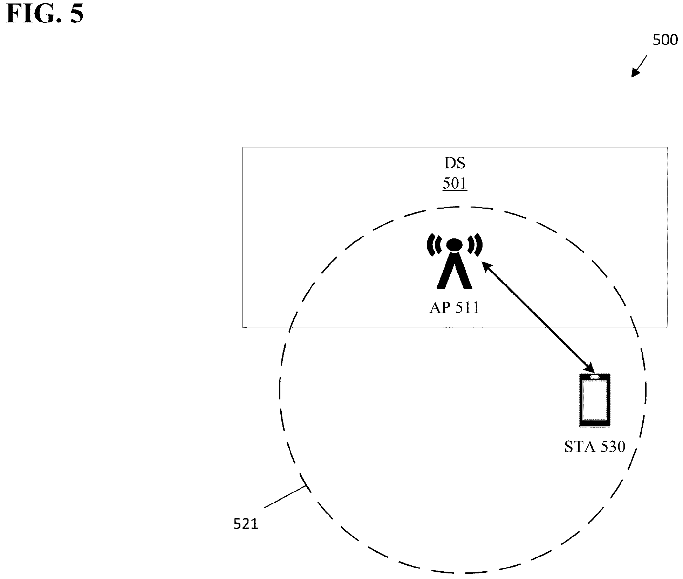

FIG. 5 is a diagram illustrating an example of managing roaming scan behavior, according to embodiments. As shown in FIG. 5, a wireless communication system 500 may include a DS 501, an AP 511 corresponding to a BSS 521, and an STA 530. Similar to the wireless communication system 400 described above, the wireless communication system 500 may include only a single AP (e.g., the AP 411), and an ESS corresponding to the DS 501 may only include a single BSS (e.g., the BSS 521).

Unlike the example described above with reference to FIG. 4, embodiments may allow the STA 530 to receive capability information about a capability of the ESS, which may allow the STA 530 to better evaluate and manage its roaming scan behavior. According to embodiments, the STA 530 may receive the capability information from the AP 511, and the capability information may indicate a number of BSSs which are included in the ESS, for example by indicating that the ESS includes only one BSS or a plurality of BSSs. Because intra-ESS roaming is not possible when only one BSS is present, the capability information may allow the STA 530 to determine whether to discontinue or suppress the roaming procedure described above.

As an example, the capability information received from the AP 511 may indicate that the BSS 521 is the only BSS included in the ESS corresponding to the DS 501. Based on the capability information, the STA 530 may determine that roaming functionality is not needed and should not be enabled. Therefore, the STA 530 may determine not to perform any portion of the roaming procedure described above. For example, the STA 530 may determine not to monitor any roaming trigger conditions or metrics, and may determine not to perform any roaming scans, while the STA 530 is connected to the AP 511 (and the BSS 521 and corresponding ESS). As a result, if the STA 530 loses its connection with the AP 511, the STA 530 may be able to disconnect from the ESS more quickly, without the need to perform any roaming scans, and therefore may be able to proceed more quickly to alternative connections such as other ESSs or other types of networks (e.g., cellular networks).

Although the example illustrated in FIG. 5 includes only a single AP 511 (and therefore only a single BSS 521), embodiments are not limited thereto. As another example, the capability information received from the AP 511 may indicate that a plurality of BSSs are included in the ESS corresponding to DS 501, and may indicate additional information about the plurality of BSSs. For example, the capability information may indicate channel information about channels used by the plurality of BSSs, and/or other information that identifies the plurality of BSSs, and may also indicate that the identified plurality of BSSs are the only BSSs which are present in the ESS.

For example, the capability information received from the AP 511 may indicate that the ESS is definitely limited to one and only one physical AP (e.g., the AP 511). For an ESS including only one physical AP, the STA 530 may only need to perform a roaming scan for channels on which BSSs are known to be present. Therefore, based on the capability information, the STA 530 may determine not to perform full channels scans, and may only perform cached channels scans corresponding to known BSSs associated with the AP 511.

For example, the STA 530 may continue to monitor an RSSI corresponding to the AP 511, and based on determining that the RSSI is below a threshold RSSI value, may perform a roaming scan only on other known channels. The STA 530 may continue to monitor a channel utilization of a channel corresponding to the BSS 521, and based on determining that the channel utilization is above a threshold channel utilization value, may perform a roaming scan only on other known channels. Similarly, the STA 530 may perform a roaming scan only on other known channels based on at least one of detecting that a beacon loss has occurred, receiving a BTM request from the AP 511, and determining that a Bluetooth link has been established by the STA 530 (for example when the link between the STA 530 and the AP 511 is in the 2.4 GHz band). In addition, the STA 530 may simply disconnect from the AP 511, without performing a roaming scan, based on receiving a deauthentication frame and/or a disassociation frame from the AP 511. According to embodiments, the known channels may only be scanned until the expected AP is found.

In addition, in inextensible ESSs that are not limited to a single physical AP, the capability information may still indicate the channel information about channels used by the plurality of BSSs, and/or the other information that identifies the plurality of BSSs, and may also indicate that the identified plurality of BSSs are the only BSSs which are present in the ESS. According to embodiments, an inextensible ESS may refer to a ESS having a set of member BSSs that is known and cannot be changed. Therefore, even in these inextensible ESSs that include more than one AP, the capability information may allow the STA 530 to avoid full channels scans, and perform only cached channels scans.

Therefore, even in some situations in which the STA 530 still performs roaming scans, embodiments may allow these roaming scans to be optimized. For example, because the capability information according to embodiments may allow the STA 530 to definitely know all of the BSSs included in the ESS, the STA may determine not to perform full channels scans, and therefore may only perform cached channels scans based on the known BSSs. Therefore, if the STA 530 loses its connection with an AP, it may be able to disconnect from the ESS more quickly, following only a short roaming scan, and therefore may be able to proceed more quickly to alternative connections such as other ESSs or other types of networks (e.g., cellular networks).

As yet another example, the capability information may indicate to the STA 530 that the ESS will assist the STA 530 in order to reduce or eliminate the need for the STA 530 to perform roaming scans. For example, the capability information received from the AP 511 may indicate that a plurality of BSSs are included in the ESS, and may further indicate that the ESS is committed to steering the STA, for example using BTM. Therefore, even if the capability information received by the STA 530 does not directly indicate additional information such as channel information about all of the BSSs included in the ESS, the capability information may still allow the STA 530 to reduce or eliminate the amount of roaming scans that are performed. For example, based on the capability information, the STA 530 may determine not to perform roaming scans, or may determine to perform roaming scans only based on receiving a BTM request, or may just accept the BTM request. Therefore, the STA 530 may determine not to monitor any roaming trigger condition except for BTM requests.

According to embodiments, the capability information may be included in one or more transmissions received by the STA 530 from the AP 511, or from another AP associated with the ESS when a plurality of APs and BSSs are included in the ESS.

For example, the capability information may be included in one or more capability bits included in an Extended Capabilities / Ultra-High Reliability (UHR) Capabilities element included in beacons sent by a UHR AP. For example, based on receiving a beacon including a capability bit that is set to signal that the ESS is definitely limited to one and only one BSS, the STA 530 may determine not to perform any roaming scans. However, embodiments are not limited thereto. For example, in some embodiments, the capability information may also be communicated using at least one of other broadcast frames (e.g. probe responses), and unicast frames received before association, during association (e.g., in an association response), and after association (e.g. Access Network Query Protocol (ANQP) response, Action frames). According to embodiments, frames sent before or during association may not be protected. In addition, the capability information may be included in a NR/RNR or other report, for example by extending the NR/RNR to definitely convey that no other neighbors are available.

According to embodiments, the capability information may be included in multiple different elements or transmissions, and may be for example received by the STA 530 at multiple times or in multiple stages. For example, the capability information may include first capability information included in a first transmission (e.g., a beacon), and second capability information included in a later transmission (e.g., NR/RNR). According to embodiments, the first capability information may indicate that the second capability information is available to be requested by the STA 530. For example, the first capability information may indicate whether the ESS includes one and only one BSS, and if the ESS includes a plurality of BSSs, the second capability information may indicate additional information about the plurality of BSSs. For example, the second capability information may indicate information that identifies the plurality of BSSs (e.g., channel information about channels used by the plurality of BSSs), or may indicate that the ESS will assist the STA 530 (e.g., that the ESS is committed to steering the STA using BTM). According to embodiments, the capability information may be protected in order to ensure that it is not tampered with. For example, mechanisms such as beacon protection, management frame protection, or any other type of protected transmission may be used.

Accordingly, embodiments may allow the STA 530 to perform a reduced roaming procedure, or discontinue or suppress it entirely. Therefore, embodiments may provide reduced latency and improved throughput in scenarios in which the link quality is low, by reducing or removing the burden of performing roaming scans.

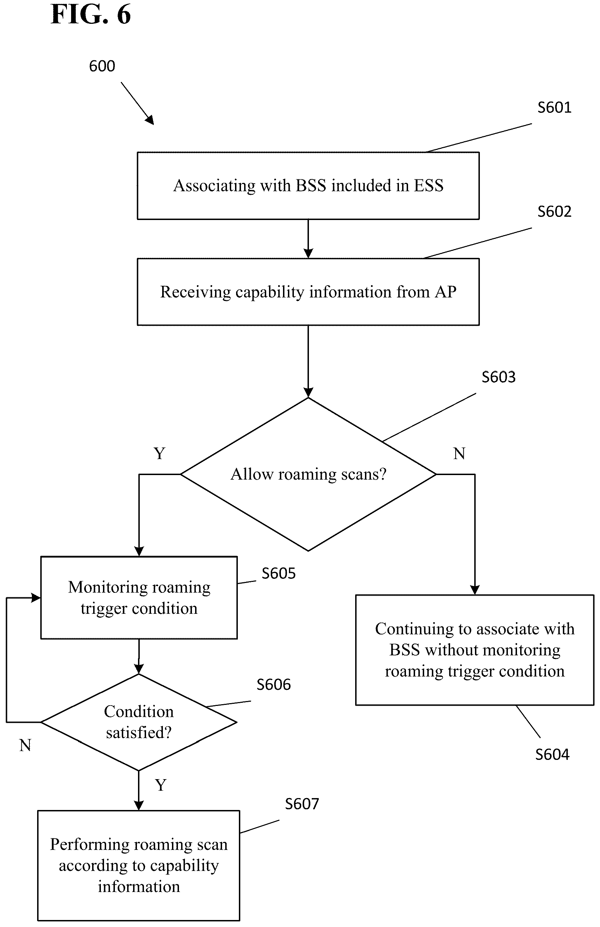

FIG. 6 is a flowchart of a process 600 for managing roaming scans, according to embodiments. In some implementations, one or more process blocks of FIG. 6 may be performed by one or more of the elements discussed above, for example one or more of the STA 201, the AP 202, the wireless communication system 500, the DS 501, the AP 511, the STA 530, and the elements included therein.

As shown in FIG. 6, at operation S601, the process 600 may include associating, by an electronic device, with a BSS included in an ESS, wherein the BSS corresponds to an AP associated with a DS for a wireless network. In embodiments, the electronic device may correspond to the STA 530, the BSS may correspond to the BSS 521, the AP may correspond to the AP 511, the DS may correspond to the DS 501, and the wireless network may correspond to the wireless communication system 500 discussed above.

As further shown in FIG. 6, at operation S602, the process 600 may include receiving, from the AP, capability information indicating whether at least one additional BSS is included in the ESS. In embodiments, the capability information may indicate a number of BSSs included in the ESS.

As further shown in FIG. 6, at operation S603, the process 600 may include determining whether to allow roaming scans based on the capability information. In embodiments, determining whether to allow roaming scans may include determining whether to enable or disable roaming functionality of the electronic device. Based on determining not to allow roaming scans (e.g., determining to disable the roaming functionality) (N at operation S603), the process 600 may proceed to operation S604, which may include continuing to associate with the BSS without performing any roaming procedures (e.g., without monitoring a roaming trigger condition, and without performing a roaming scan). Based on determining to allow roaming scans (e.g., determining to enable the roaming functionality) (Y at operation S603), the process 600 may proceed to operation S605, which may include monitoring at least one roaming trigger condition.

As further shown in FIG. 6, at operation S606, the process 600 may include determining whether the at least one roaming trigger condition is satisfied. Based on determining that the at least one roaming trigger condition is not satisfied (N at operation S606), the process 600 may return to operation S605. Based on determining that the at least one roaming trigger condition is satisfied (Y at operation S606), the process 600 may proceed to operation S607, which may include performing a roaming scan according to the capability information.

In embodiments, the process 600 may further include, based on the capability information indicating that no additional BSSs are included in the ESS, determining not to allow the roaming scans.

In embodiments, the process 600 may further include, based on the capability information indicating that at least one additional BSS is included in the ESS (e.g., that the ESS includes a plurality of BSSs), determining to allow the roaming scans.

In embodiments, the capability information may further indicate channel information associated with all of the plurality of additional BSSs, and the process 600 may further include performing the roaming scan as a cached channels scan based on the channel information.

In embodiments, the roaming trigger condition may correspond to at least one from among an RSSI corresponding to the AP, a channel utilization of a channel corresponding to the BSS, a deauthentication frame being received from the AP, a beacon loss being detected, and a Bluetooth link being established by the electronic device. However, embodiments are not limited thereto, and there may be other roaming trigger conditions.

In embodiments, the capability information may further indicate that the ESS is committed to steering the electronic device using BTM, and the process 600 may further include determining that the roaming trigger condition is satisfied based only on receiving a BTM request from the AP.

In embodiments, the wireless network may be an Institute of Electrical and Electronics Engineers (IEEE) 802.11 WLAN.

In embodiments, the capability information may be included in at least one from among a beacon, a probe response, a pre-association unicast frame, an association response, an ANQP response, an Action frame, an NR, and an RNR.

Although FIG. 6 shows example blocks of the process 600, in some implementations, the process 600 may include additional blocks, fewer blocks, different blocks, or differently arranged blocks than those depicted in FIG. 6. Additionally, or alternatively, two or more of the blocks of the process 600 may be performed in parallel, or may be combined in any order.

The disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. A singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., via wires), wirelessly, or via a third element.

As used in connection with the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

One or more embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to one or more embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one or more embodiments, each component (e.g., a module or a program) of the above-described components may include a single entity or multiple entities. According to one or more embodiments, one or more of the above-described components may be omitted, or one or more other components may be added. Alternatively or additionally, a plurality of components (e.g., modules or programs) may be integrated into a single component. In such a case, according to one or more embodiments, the integrated component may still perform one or more functions of each of the plurality of components in the same or similar manner as they are performed by a corresponding one of the plurality of components before the integration. According to one or more embodiments, operations performed by the module, the program, or another component may be carried out sequentially, in parallel, repeatedly, or heuristically, or one or more of the operations may be executed in a different order or omitted, or one or more other operations may be added.

According to one or more embodiments, in a non-volatile storage medium storing instructions, the instructions may be configured to, when executed by at least one processor, cause the at least one processor to perform at least one operation. The at least one operation may include displaying an application screen of a running application on a display, identifying a data input field included in the application screen, identifying a data type corresponding to the data input field, displaying at least one external electronic device, around the electronic device, capable of providing data corresponding to the identified data type, receiving data corresponding to the identified data type from an external electronic device selected from among the at least one external electronic device through a communication module, and entering the received data into the data input field.

Embodiments are set out in the following Clauses:
Clause 1. An electronic device, comprising:
   a transceiver;
   at least one processor; and
   a memory configured to store instructions which, when executed by the at least one processor, cause the electronic device to:
      associate with a basic service set (BSS) included in an extended service set (ESS), wherein the BSS corresponds to an access point (AP) associated with a distribution system for a wireless network;
      receive, from the AP, capability information indicating whether at least one additional BSS is included in the ESS;
      determine whether to allow roaming scans based on the capability information;
      based on determining to allow the roaming scans:
         monitor a roaming trigger condition; and
         based on determining that the roaming trigger condition is satisfied, perform a roaming scan according to the capability information; and
      based on determining not to allow the roaming scans, continue to associate with the BSS without monitoring the roaming trigger condition.
Clause 2. The electronic device of Clause 1, wherein the instructions, when executed by the at least one processor, further cause the electronic device to:
   based on the capability information indicating that no additional BSSs are included in the ESS, determine not to allow the roaming scans.
Clause 3. The electronic device of Clause 1 or Clause 2, wherein the instructions, when executed by the at least one processor, further cause the electronic device to:
   based on the capability information indicating that the at least one additional BSS is included in the ESS, determine to allow the roaming scans.
Clause 4. The electronic device of Clause 3, wherein the capability information further indicates channel information associated with all of the at least one additional BSS, and
   wherein the instructions, when executed by the at least one processor, further cause the electronic device to perform the roaming scan as a cached channels scan based on the channel information, and not scan any other channels.
Clause 5. The electronic device of Clause 4, wherein the roaming trigger condition corresponds to at least one from among a received signal strength indicator (RSSI) corresponding to the AP, a channel utilization of a channel corresponding to the BSS, a deauthentication frame being received from the AP, a beacon loss being detected, and a Bluetooth link being established by the electronic device.
Clause 6. The electronic device of Clause 3, wherein the capability information further indicates that the ESS is committed to steering the electronic device using BSS transition management (BTM), and
   wherein the instructions, when executed by the at least one processor, further cause the electronic device to determine that the roaming trigger condition is satisfied based only on receiving a BTM request from the AP.
Clause 7. The electronic device of any preceding Clause, wherein the wireless network is an Institute of Electrical and Electronics Engineers (IEEE) 802.11 wireless local area network (WLAN).
Clause 8. The electronic device of Clause 7, wherein the capability information is included in at least one from among a beacon, a probe response, a pre-association unicast frame, an association response, an access network query protocol (ANQP) response, an action frame, a neighbor report, and a reduced neighbor report.
Clause 9. A method of managing roaming scans, the method being performed by at least one processor included in an electronic device, and the method comprising:
   associating with a basic service set (BSS) included in an extended service set (ESS), wherein the BSS corresponds to an access point (AP) associated with a distribution system for a wireless network;
   receiving, from the AP, capability information indicating whether at least one additional BSS is included in the ESS;
   determining whether to allow roaming scans based on the capability information;
   based on determining to allow the roaming scans:
      monitoring a roaming trigger condition; and
      based on determining that the roaming trigger condition is satisfied, performing a roaming scan according to the capability information; and
   based on determining not to allow the roaming scans, continuing to associate with the BSS without monitoring the roaming trigger condition.
Clause 10. The method of Clause 9, further comprising:
   based on the capability information indicating that no additional BSSs are included in the ESS, determining not to allow the roaming scans.
Clause 11. The method of Clause 9 or Clause 10, further comprising:
   based on the capability information indicating that the at least one additional BSS is included in the ESS, determining to allow the roaming scans.
Clause 12. The method of Clause 11, wherein the capability information further indicates channel information associated with all of the at least one additional BSS is, and
   wherein the method further comprises performing the roaming scan as a cached channels scan based on the channel information, and not scanning any other channels.
Clause 13. The method of Clause 12, wherein the roaming trigger condition corresponds to at least one from among a received signal strength indicator (RSSI) corresponding to the AP, a channel utilization of a channel corresponding to the BSS, a deauthentication frame being received from the AP, a beacon loss being detected, and a Bluetooth link being established by the electronic device.
Clause 14. The method of Clause 11, wherein the capability information further indicates that the ESS is committed to steering the electronic device using BSS transition management (BTM), and
   wherein the method further comprises determining that the roaming trigger condition is satisfied based only on receiving a BTM request from the AP.
Clause 15. The method of any of Clauses 9-14, wherein the capability information is included in at least one from among a beacon, a probe response, a pre-association unicast frame, an association response, an access network query protocol (ANQP) response, an action frame, a neighbor report, and a reduced neighbor report.

The embodiments of the disclosure described in the present specification and the drawings are only presented as specific examples to easily explain the technical content according to the embodiments of the disclosure and help understanding of the embodiments of the disclosure, not intended to limit the scope of the embodiments of the disclosure. Therefore, the scope of one or more embodiments of the disclosure should be construed as encompassing all changes or modifications derived from the technical spirit of one or more embodiments of the disclosure in addition to the embodiments disclosed herein.

## Claims

1. An electronic device, comprising:
a transceiver (206);
at least one processor (208); and
a memory (210) configured to store instructions which, when executed by the at least one processor (208), cause the electronic device to:
associate with a basic service set, BSS, included in an extended service set, ESS, (S601) wherein the BSS corresponds to an access point, AP, associated with a distribution system for a wireless network;
receive, from the AP, capability information (S602) indicating whether at least one additional BSS is included in the ESS;
determine whether to allow roaming scans (S603) based on the capability information;
based on determining to allow the roaming scans:
monitor a roaming trigger condition (S605); and
based on determining that the roaming trigger condition is satisfied, perform a roaming scan according to the capability information (S607); and
based on determining not to allow the roaming scans, continue to associate with the BSS without monitoring the roaming trigger condition (S604).

2. The electronic device of claim 1, wherein the instructions, when executed by the at least one processor (208), further cause the electronic device to:
based on the capability information indicating that no additional BSSs are included in the ESS, determine not to allow the roaming scans.

3. The electronic device of claim 1 or claim 2, wherein the instructions, when executed by the at least one processor (208), further cause the electronic device to:
based on the capability information indicating that the at least one additional BSS is included in the ESS, determine to allow the roaming scans.

4. The electronic device of any preceding claim, wherein the instructions, when executed by the at least one processor (208), further cause the electronic device to:
based on the capability information further indicating channel information associated with all of the at least one additional BSS, perform the roaming scan as a cached channels scan based on the channel information, and not scan any other channels.

5. The electronic device of any preceding claim, wherein the roaming trigger condition corresponds to at least one from among a received signal strength indicator corresponding to the AP, a channel utilization of a channel corresponding to the BSS, a deauthentication frame being received from the AP, a beacon loss being detected, and a Bluetooth link being established by the electronic device.

6. The electronic device of any of claims 1-3, wherein the instructions, when executed by the at least one processor (208), further cause the electronic device to:
based on the capability information further indicating that the ESS is committed to steering the electronic device using BSS transition management, BTM, determine that the roaming trigger condition is satisfied based only on receiving a BTM request from the AP.

7. The electronic device of any preceding claim, wherein the wireless network is an Institute of Electrical and Electronics Engineers 802.11 wireless local area network.

8. The electronic device of any preceding claim, wherein the capability information is included in at least one from among a beacon, a probe response, a pre-association unicast frame, an association response, an access network query protocol response, an action frame, a neighbor report, and a reduced neighbor report.

9. A method of managing roaming scans, the method being performed by at least one processor included in an electronic device, and the method comprising:
associating with a basic service set, BSS, included in an extended service set, ESS, (S601) wherein the BSS corresponds to an access point, AP, associated with a distribution system for a wireless network;
receiving, from the AP, capability information (S602) indicating whether at least one additional BSS is included in the ESS;
determining whether to allow roaming scans (S603) based on the capability information;
based on determining to allow the roaming scans:
monitoring a roaming trigger condition (S605); and
based on determining that the roaming trigger condition is satisfied, performing a roaming scan according to the capability information (607); and
based on determining not to allow the roaming scans, continuing to associate with the BSS without monitoring the roaming trigger condition (604).

10. The method of claim 9, further comprising:
based on the capability information indicating that no additional BSSs are included in the ESS, determining not to allow the roaming scans.

11. The method of claim 9 or claim 10, further comprising:
based on the capability information indicating that the at least one additional BSS is included in the ESS, determining to allow the roaming scans.

12. The method of any of claims 9-11, further comprising, based on the capability information further indicating channel information associated with all of the at least one additional BSS, performing the roaming scan as a cached channels scan based on the channel information, and not scanning any other channels.

13. The method of any of claims 9-12, wherein the roaming trigger condition corresponds to at least one from among a received signal strength indicator (RSSI) corresponding to the AP, a channel utilization of a channel corresponding to the BSS, a deauthentication frame being received from the AP, a beacon loss being detected, and a Bluetooth link being established by the electronic device.

14. The method of any of claims 9-11, further comprising, based on the capability information further indicating that the ESS is committed to steering the electronic device using BSS transition management, BTM,
determining that the roaming trigger condition is satisfied based only on receiving a BTM request from the AP.

15. The method of any of claims 9-14, wherein the capability information is included in at least one from among a beacon, a probe response, a pre-association unicast frame, an association response, an access network query protocol response, an action frame, a neighbor report, and a reduced neighbor report.
